# FASCICULE DE BREVET EUROPEEN

(11) **EP 1 409 874 B1**
(45) Date de publication et mention de la délivrance du brevet: **18.07.2012**
(21) Numéro de dépôt: 02755566.3
(22) Date de dépôt: 29.05.2002
(51) Int. Cl.: F04C 2/344

(54) **ROTOR POUR POMPE A PALETTES**
FLÜGELZELLENPUMPENROTOR
REDUCED WEAR ROTOR AND PUMP COMPRISING SAME

(30) Priorité: 01.06.2001 IT TO20010521
(43) Date de publication de la demande: 21.04.2004
(73) Titulaire: VHIT S.p.A., 26013 Crema (IT)
(72) Inventeur: CADEDDU, Leonardo, I-26013 CREMA (IT); SAMANNI, Emilio, I-26010 IZANO (IT); ANASTASI, Alberto, I-10128 TORINO (IT); FAUDA, Alessandro, CISLIANO, 20080 MILAN (IT)
(74) Mandataire: Gruber, Peter
(86) Numéro de dépôt international: PCT/IB2002/003448
(87) Numéro de publication internationale: WO 2002/097274

(56) Documents cités:
- WO-A-96/33339
- DE-A- 19 942 221
- DE-C- 19 844 904
- FR-A- 2 448 657
- US-A- 3 955 905
- US-A- 5 707 222
- PATENT ABSTRACTS OF JAPAN vol. 2000, no. 14, 5 mars 2001 (2001-03-05) -& JP 2000 329149 A (DENSO CORP), 28 novembre 2000 (2000-11-28)

## Description

La présente invention se raporte principalement à un rotor à usure réduite et à une pompe comportant un tel rotor. Une telle pompe est utilisée en particulier dans l'industrie automobile comme source de dépression d'air pour des dispositifs d'assistance au freinage. La présente invention se rapporte également à des pompes combinés utilisées par exemple à la fois comme source de dépression et pour alimenter en carburant un moteur thermique.

Un rotor selon la préambule de la revendication 1 et une pompe comportant un tel rotor est connu par les document US-A-5 707 222 et DE 198 44 904 C. Le rotor selon ces documents comprend un élément de transmission, un porte palettes et au moins une palette. Ledit élément de transmission transmet un couple audit porte palettes. Le porte palettes comporte un élément d'interposition immobile radialement par rapport au porte palettes et solidarisé au porte palettes. L'élément d'interposition est disposé entre les surfaces d'appui entre l'élément de transmission et le porte palettes pour transmettre l'appui de l'élément de transmission au porte palettes. L'élément d'interposition est résistant à l'usure par frottement de l'élément de transmission lors du déplacement radial de l'élément de transmission par rapport au porte palettes. L'élément de transmission et le porte palettes sont des pièces séparés et la manipulation du rotor avec les pièces séparés est difficile.

C'est un but de la présente invention de fournir un rotor et une pompe à construction simplifiée et solidité améliorée.

Ce but est atteint par les caractéristiques de la revendication 1.

La présente invention a également pour objet un rotor caractérisé en ce que l'au moins un élement d'interposition comporte deux ailettes parallèles.

La présente invention a aussi pour objet un rotor caractérisé en ce que les deux ailettes sont reliées par un plateau.

La présente invention a aussi pour objet un rotor caractérisé en ce que les ailettes s'étendent perpendiculairement au plateau et du même côté du plateau.

La présente invention a aussi pour objet un rotor caractérisé en ce que les ailettes sont symétriques par rapport à un axe longitudinal au plateau.

La présente invention a aussi pour objet un rotor caractérisé en ce que l'au moins un élément d'interposition est solidarisé à une tige centrale portée par le porte palettes.

La présente invention a aussi pour objet un rotor caractérisé en ce que le plateau comporte un orifice dan lequel débouchent au moins deux languettes coopérant avec la tige centrale portée par le porte palettes.

La présente invention a aussi pour objet un rotor caractérisé en ce que le plateau comporte des moyens de fixation coopérant avec des seconds moyens de fixations portés par le porte palettes.

La présente invention a aussi pour objet un rotor caractérisé en ce que les moyens de fixation portés par le plateau comportent un orifice de plus petit diamètre bordé par un manchon et en ce que les moyens de fixation comportent une tige de plus grand diamètre portés par le porte palettes, ladite tige étant munie d'un bourrelet annulaire en saillie sur la périphérie se formant après montage à force du plateau autour de la tige et en ce que le manchon est disposé après montage entre le bourrelet et l'élément de transmission.

La présente invention a aussi pour objet un rotor caractérisé en ce que le plateau vient en appui sur une surface d'appui pratiquée dans la périphérie de ladite tige perpendiculairement à l'axe de la tige

La présente invention a aussi pour objet un rotor caractérisé en ce que l'élément de transmission est en matériau métallique et le porte palettes est en matière plastique.

La présente invention a aussi pour objet un rotor caractérisé en ce que l'élément de transmission est réalisé en acier.

La présente invention a aussi pour objet un rotor caractérisé en ce que l'élément d'interposition est réalisé en matériau métallique.

La présente invention a aussi pour objet un rotor caractérisé en ce que l'élément d'interposition est réalisé en acier à ressort.

La présente invention a aussi pour objet un rotor caractérisé en ce que l'élément d'interposition est réalisé par pliage.

La présente invention a aussi pour objet un rotor caractérisé en ce que les moyens de fixation portés par le plateau de l'élément d'interposition sont réalisés par emboutissage.

La présente invention a également pour objet une pompe formant au moins une source de dépression caractérisée en ce qu'elle comporte au moins un rotor selon la présente invention.

La présente invention a aussi pour objet une pompe caractérisée en ce que l'élément est entraîné par un arbre à cames

La présente invention a aussi pour objet une pompe caractérisée en ce que l'élément est entraîné par un moteur électrique.

La présente invention a aussi pour objet une pompe caractérisée en ce que l'élément est entraîné par une poulie entraîné par une courroie.

La présente invention sera mieux comprise grâce à de la description qui suivra et des figures annexées sur lesquelles :
La figure 1 est une vue de trois quart d'une pompe selon la présente invention.
La figure 2 est une vue de trois quart d'un premier mode de réalisation d'un élément d'appui selon la présente invention
La figure 3 est une vue en perspective isométrique d'un rotor comportant l'élément de la figure 2 ;
La figure 4 est une vue de dessus de la figure 3 sans l'élément d'appui ;
La figure 5 est une vue de trois quart d'un second mode de réalisation d'un rotor selon la présente invention ;
La figure 6 est une vue en coupe d'un ensemble élément d'appui-élément de transmission selon la présente invention ;
La figure 7 est une vue de détail de la figure 6

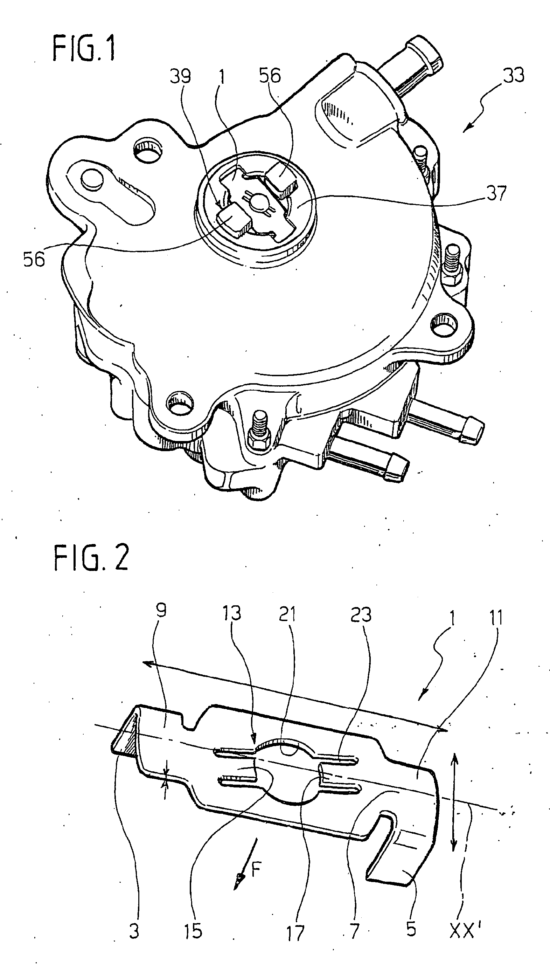

On peut voir sur les figures 1 et 2, un élément d'interposition 1 comportant au moins deux ailettes 3, 5 , avantageusement monoblocs reliées par un plateau 7. Le plateau 7 est sensiblement plan de première dimension longitudinale 1 et seconde dimension transversale L très supérieures à une troisième dimension e et d'axe longitudinal XX', le plateau 7 comportant deux branches 9,11 longitudinalement opposées. Les ailettes 3,5 s'étendent des branches 9,11 dans la direction de la flèche F perpendiculairement au plan du plateau, opposées l'une de l'autre par rapport à l'axe XX'.

Le plateau 7 comporte également des moyens 13 de fixation de la pièce 1 sur un rotor. Les moyens de fixation comprennent au moins deux languettes 15, 17 débouchant dans un orifice 21 pratiqué au centre du plateau 7. Les languettes 15, 17 sont délimitées par quatre fentes 23 pratiquées dans le plateau 7 s'étendant radialement de l'orifice 21 en direction de la périphérie extérieure du plateau 3 et avantageusement parallèles entre elles. Avantageusement, les fentes forment un angle non nul avec l'axe longitudinale XX' du plateau 3.

La pièce 1 est fixée bloquée sur le rotor par emmanchement à force sur une pièce du rotor coopérant avec l'orifice 21 grâce aux languettes 15,17 élastiques dans un sens transversale au plan du plateau 7.

La pièce 1 est avantageusement réalisée en un matériau métallique, par exemple en acier à ressort.

La pièce 1 est avantageusement réalisée par pliage.

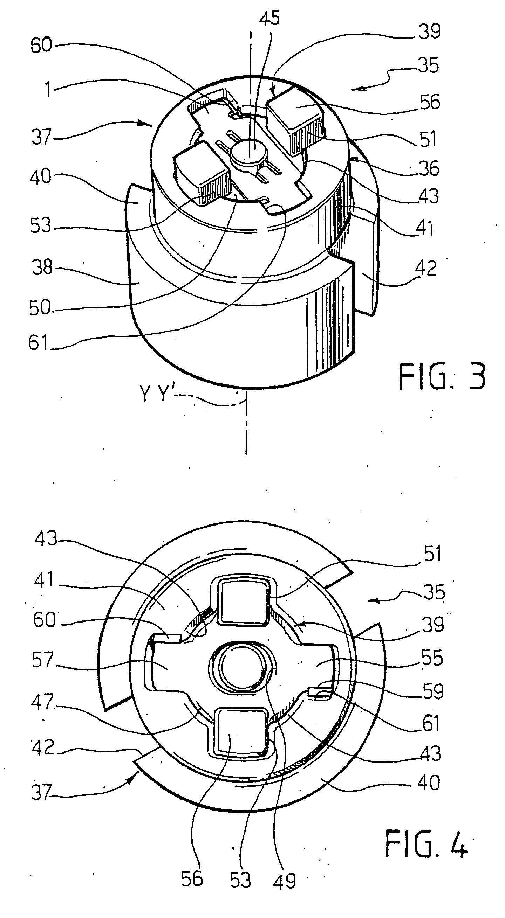

Sur la figure 1, on peut voir une pompe à palettes 33 selon la présente invention, comportant un rotor 35 (figures 3 et 4) monté dans un corps de pompe, entraîné par exemple par un arbre à cames d'un moteur de véhicule automobile (non représentés). Le rotor comporte un porte palettes 37, un élément 39 de transmission du couple du moteur du véhicule au porte palettes, une palette (non représentée) et un pièce d'appui 1. Le porte palettes 37 comporte un corps 37', avantageusement réalisé en matière plastique, muni à une première extrémité longitudinale d'une première partie 36 de plus petit diamètre extérieur et d'axe YY' formée par un manchon borgne 41 et à une seconde extrémité opposée à la première extrémité, d'une seconde partie cylindrique 38 de plus grand diamètre extérieur coaxiale à la première partie 36 se raccordant à la première partie 36 de plus petit diamètre extérieur par un épaulement 40. Le manchon 41 a une forme intérieure ayant une section transversale en forme de croix, avantageusement à quatre branches. Les branches de la croix étant séparées, avantageusement par des calottes 43, la surface intérieure des branches comportant des faces 61 s'étendant radialement et parallèlement à l'axe YY'. La partie cylindrique 38 de plus grand diamètre extérieur est munie d'une fente 42 susceptible de recevoir une palette, la fente 42 s'étendant axialement suivant YY' d'une première extrémité longitudinale à une seconde extrémité longitudinale formée partiellement par l'épaulement 40, et traversant radialement le manchon 41.

Le corps 37' du porte palettes 37 comporte également une tige 45 s'étendant du fond du manchon 41 vers l'extrémité ouverte du manchon parallèlement à l'axe YY'.

L'élément de transmission 39 comporte une base 50 d'axe YY' à quatre branches 51, 53, 55, 57 disposées en croix et reliées par des portions d'arc de cercle 47 et une ouverture 49 centrale, avantageusement oblongue permettant le passage de la tige 45. L'élément de transmission 39 comporte également sur une face de la base 50 des ergots 56 radialement opposés faisant saillis en s'étendant axialement des branches 51, 53 selon l'axe YY'.
Les branches 55, 57 de l'élément de transmission 39 comportent des faces 59, 60 respectivement s'étendant dans une direction radiale et dans une direction parallèle à l'axe YY' et opposées l'une de l'autre par rapport à l'axe YY'.

L'élément de transmission 39 est disposé dans l'évidement intérieur du manchon 41 du corps 37' du porte palettes, les portions d'arc de cercle 47 en vis-à-vis des calottes 43, la tige 45 pénétrant dans l'ouverture 49, la face comportant les ergots 56 étant orientée vers l'extérieur et les faces 59, 60 coopérant chacune respectivement avec une face 61 de la surface intérieur du manchon.

L'élément de transmission est avantageusement réalisé en matériau métallique, par exemple en acier.

Le porte palettes 37 comporte un élément d'interposition 1 selon la présente invention de manière à ce que les ailettes 3, 5 de l'élément 1 viennent s'intercaler entre l'élément de transmission 39 et le corps 37' du porte palettes 37 entre les surfaces 59, 60 et les faces 61 et transmettent l'appui de l'élément de transmission 39 au porte palettes 37. L'élément 1 est monté sur la porte palettes 37 de manière à ce qu'il n'y ai pas de mouvement radial des ailettes par rapport au porte palettes 37 évitant l'usure par frottement du porte palettes. Selon la premier mode de réalisation, l'élément 1 est solidarisé au corps 37' du porte palettes par encliquetage du plateau 7 reliant les ailettes 3, 5 dans la direction de la flèche sur l'extrémité libre de la tige au moyen des languettes 15,17.

L'élément 1 est résistant à l'usure par frottement lors du déplacement de l'élément de transmission par rapport au porte palettes, le corps du porte palettes ne subit alors pas l'usure provoquée auparavant par le frottement de l'élément de transmission 39 sur le corps 37' du porte palettes 37 sans modifier la transmission du couple. Par conséquent, on obtient une pompe à durée de vie allongée.

De plus, l'élément 1 permet avantageusement de solidariser l'élément de transmission 39 au porte palettes 37 évitant la séparation de l'élément de transmission 39 du porte palettes 37 lors de manipulations de la pompe comportant un tel dispositif

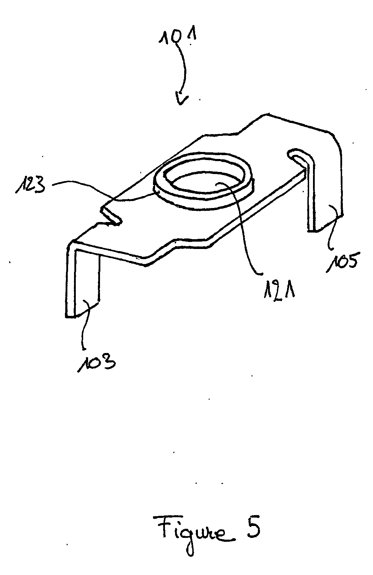

Sur la figure 5, on peut voir un second mode de réalisation d'un élément 101 selon la présente invention, celui-ci diffère de l'élément 1 selon le premier mode de réalisation par les moyens de solidarisation de l'élément au porte palettes.

Par conséquent nous ne décrirons en détail que les moyens de solidarisation.

L'élément 101 comporte des premiers moyens 113a de solidarisation sans déplacement radial de l'élément 101 au corps 137' du porte palettes coopérant avec des seconds moyens de solidarisation 113b de l'élément au corps du porte palettes porté par le corps du porte palettes, Les premiers moyens 113b comportent un orifice 121 disposé sensiblement au centre du plateau 107 et un manchon 123 bordant l'orifice 121 et s'étendant perpendiculairement à la surface du plateau 107 dans la direction opposée à celle dans la quelle s'étendent les ailettes 103,105.

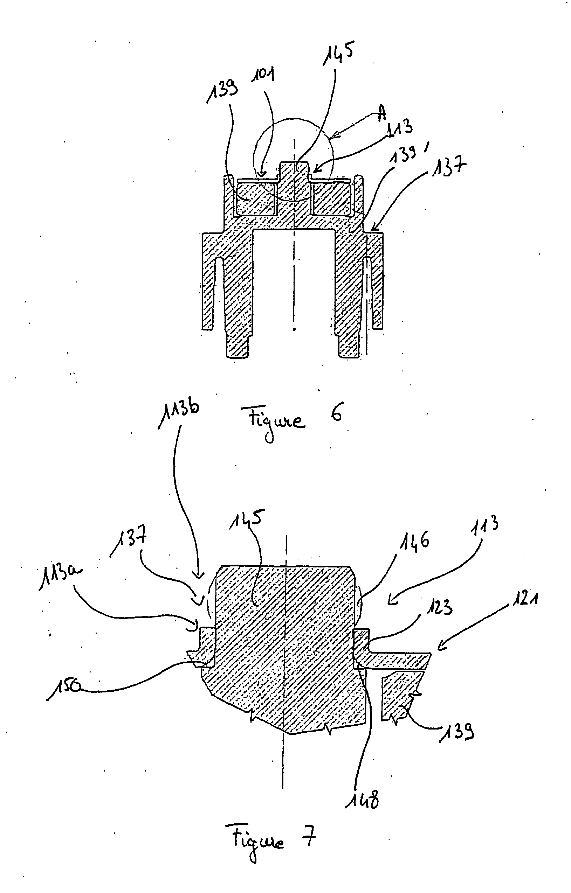

Sur la figure 6 et sur la figure 7 qui représente un détail référencé A agrandi de la figure 6, on peut voir le rotor d'axe YY' selon le deuxième mode de réalisation comportant les seconds moyens 113b. Les seconds moyens 113b sont formés par une tige centrale 145 portée par le corps du porte palettes 137 de diamètre extérieure D supérieure au diamètre d de l'orifice 121 pratiqué dans le plateau 107 de l'élément 101.

La tige 145 comporte avantageusement une surface d'appui 150 pour l'élément d'appui 101, la surface 150 est formé par un décrochement annulaire pratiqué sur la périphérie de la tige 145 sensiblement perpendiculairement à l'axe YY' de manière à ce que lorsque l'élément de transmission 139 et l'élément d'appui sont disposés dans le porte palettes, une partie du plateau 107 entourant l'orifice 121 repose sur le décrochement 150.

L'élément 101 est alors solidarisé au porte palettes après la mise en place de l'élément de transmission 139, par emmanchement à force du manchon 123 autour de la tige 145. Lors de l'assemblage, du fait de la différence de diamètre entre celui d de l'orifice 121 et celui D de la tige 145, il a y une réduction élastique temporaire du diamètre D de la tige 145. Puis lorsque le plateau 107 arrive en appui contre la surface annulaire d'appui 150, la tige 145 se détend élastiquement en formant un bourrelet annulaire 146 de manière à ce que le manchon 123 soit disposé après montage entre l'élément de transmission 139 et le bourrelet 146.

De plus les premiers moyens de solidarisation 113a, plus précisément le manchon 123 est avantageusement est réalisé par emboutissage ce qui confère au raccord 148 entre le plateau 7 et le manchon 123 une forme sensiblement arrondie qui a pour avantage lors du fonctionnement de la pompe de réduire les risques d'usure de la tige centrale 145 et également d'éviter la formation de copeaux lors du montage de l'élément 101 sur le porte palettes

De plus, le moyen 101 permet avantageusement de solidariser l'élément de transmission 139 au porte palettes 137 évitant la séparation de l'élément de transmission 139 du porte palettes 137 lors de manipulations de la pompe comportant un tel dispositif.

Il est bien entendu que la présente invention ne se limite pas un rotor à une seule palette, le rotor selon la présent invention étant susceptible de comporter plusieurs palettes par une modification simple de la présente invention par un homme du métier.

Il est également bien entendu que la pompe selon la présente invention peut être entraînée par un arbre à cames de moteur thermique mais également par tout dispositif susceptible de fournir un mouvement de rotation.

Il est également bien entendu que la pompe selon la présente invention forme au moins une source de dépression mais est également susceptible d'alimenter en liquide, par exemple en carburant un moteur.

La présente invention s'applique notamment à l'industrie automobile.

La présente invention s'applique principalement à l'industrie du freinage, et plus particulièrement aux dispositifs d'assistance au freinage.

## Revendications

1. Rotor comprenant un élément de transmission (39;139), un porte palettes (37;137) et au moins une palette, ledit élément de transmission (39;139) transmettant un couple audit porte palettes (37;137), le porte palettes (37;137) comportant au moins un élément d'interposition (1;101) immobile radialement par rapport au porte palettes (37;137) et solidarisé sur le porte palettes (37;137), l'au moins un élément d'interposition étant disposé entre les surfaces d'appui entre l'élément de transmission (39;139) et le porte palettes (37;137) pour transmettre l'appui de l'élément de transmission (39;139) au porte palettes (37;137), ledit au moins un élément d'interposition (1;101) étant résistant à l'usure par frottement de l'élément de transmission (39;139) lors du déplacement radial de l'élément de transmission (39;139) par rapport au porte palettes (37;137), **caractérisé en ce que** l'élément de transmission (39;139) est solidarisé au porte palettes (37;137) par l'au moins un élément d'interposition.

2. Rotor selon la revendication 1 **caractérisé en ce que** l'au moins un élément d'interposition (1,101) comporte deux ailettes parallèles (3,5,103,105).

3. Rotor selon la revendication 2 **caractérisé en ce que** les deux ailettes (3,103,5,105) sont reliées par un plateau(7,107).

4. Rotor selon la revendication 3 **caractérisé en ce que** les ailettes (3,103,5,105) s'étendent perpendiculairement au plateau (7,107) et du même côté du plateau (7,107).

5. Rotor selon la revendications 3 ou 4 **caractérisé en ce que** les ailettes (3,5,103,105) sont symétriques par rapport à un axe longitudinale (XX') du plateau (7,107).

6. Rotor selon l'une quelconque des revendications de 3 à 5 **caractérisé en ce que** l'au moins un élément d'interposition est solidarisé à une tige centrale (45,145) porté par le porte palettes (27,137).

7. Rotor selon la revendication précédente **caractérisé en ce que** le plateau (7) comporte un orifice (21) dan lequel débouchent au moins deux languettes(15,17) coopérant avec la tige centrale (45) porté par le porte palettes (37).

8. Rotor selon la revendication 6 **caractérisé en ce que** le plateau comporte des moyens de fixation (113a) coopérant avec des seconds moyens de fixations (113b) portés par le porte palettes.

9. Rotor selon la revendication 8 **caractérisé en ce que** les moyens de fixation (113a) portés par le plateau (107) comportent un orifice (121) de plus petit diamètre (d) bordé par un manchon (123) et **en ce que** les moyens de fixation (113b) comportent une tige (145) de plus grand diamètre (D) portés par le porte palettes, ladite tige étant munie d'un bourrelet annulaire (146) en saillie sur la périphérie se formant après montage à force du plateau (107) autour de la tige (145) et **en ce que** le manchon est disposé après montage entre le bourrelet (146) et l'élément de transmission.

10. Rotor selon la revendication précédente **caractérisé en ce que** le plateau (107) vient en appui sur une surface d'appui (150) pratiquée dans la périphérie de ladite tige (145) perpendiculairement à l'axe de la tige

11. Rotor selon l'une quelconque des revendications précédentes **caractérisé en ce que** l'élément de transmission (39,139) est en matériau métallique et le porte palettes (37,137) est en matière plastique.

12. Rotor selon la revendication précédente **caractérisé en ce que** l'élément de transmission est réalisé en acier.

13. Rotor selon l'une quelconque des revendications précédentes **caractérisé en ce que** l'élément d'interposition (1,101) est réalisé en matériau métallique.

14. Rotor selon la revendication précédente **caractérisé en ce que** l'élément d'interposition est réalisé en acier à ressort.

15. Rotor selon la revendication 13 ou 14 **caractérisé en ce que** l'élément d'interposition (1,101) est réalisé par pliage.

16. Rotor selon l'une quelconque des revendications de 9 ou 10 **caractérisé en ce que** les moyens de fixation (113a) portés par le plateau de l'élément d'interposition (101) sont réalisés par emboutissage.

17. Pompe formant au moins une source de dépression **caractérisée en ce qu'**elle comporte au moins un rotor selon l'une des revendications précédentes.

18. Pompe selon la revendication 15 **caractérisée en ce que** l'élément de transmission (39,139) est entraîné par un arbre à cames.

19. Pompe selon la revendication 15 **caractérisée en ce que** l'élément de transmission (9,139) est entraîné par un moteur électrique.

20. Pompe selon la revendication 15 **caractérisée en ce que** l'élément de transmission (39,139) est entraîné par une poulie entraîné par une courroie.

## Claims

1. Rotor comprising a transmission element (39; 139), a vanes carrier (37; 137) and at least one vane, the said transmission element (39; 139) transmitting a torque to the said vanes carrier (37; 137), the vanes carrier (37; 137) comprising at least one interposed element (1; 101) radially immobile with respect to the vanes carrier (37; 137) and secured to the vanes carrier (37; 137), the at least one interposed element being positioned between the mutually-bearing surfaces of the transmission element (39; 139) and of the vanes carrier (37; 137) in order to transmit the pressure of the transmission element (39; 139) to the vanes carrier (37; 137), the said at least one interposed element (1; 101) being resistant to rubbing wear of the transmission element (39; 139) during the radial movement of the transmission element (39; 139) with respect to the vanes carrier (37; 137), **characterized in that** the transmission element (39; 139) is secured to the vanes carrier (37; 137) by the at least one interposed element.

2. Rotor according to Claim 1, **characterized in that** the at least one interposed element (1; 101) comprises two parallel wings (3, 5, 103, 105).

3. Rotor according to Claim 2, **characterized in that** the two wings (3, 103, 5, 105) are connected by a plate (7, 107).

4. Rotor according to Claim 3, **characterized in that** the wings (3, 103, 5, 105) extend perpendicular to the plate (7, 107) and on the same side of the plate (7, 107).

5. Rotor according to Claim 3 or 4, **characterized in that** the wings (3, 5, 103, 105) are symmetric about a longitudinal axis (XX') of the plate (7, 107).

6. Rotor according to any one of Claims 3 to 5, **characterized in that** the at least one interposed element is secured to a central rod (45, 145) carried by the vanes carrier (27, 137).

7. Rotor according to the preceding claim, **characterized in that** the plate (7) has an orifice (21) into which there emerge at least two tabs (15, 17) collaborating with the central rod (45) carried by the vanes carrier (37).

8. Rotor according to Claim 6, **characterized in that** the plate comprises fixing means (113a) collaborating with second fixing means (113b) carried by the vanes carrier.

9. Rotor according to Claim 8, **characterized in that** the fixing means (113a) carried by the plate (107) comprise an orifice (121) of smaller diameter (d) bordered by a sleeve (123), and **in that** the fixing means (113b) comprise a rod (145) of larger diameter (D) carried by the vanes carrier, the said rod being fitted with an annular bulge (146) projecting from its periphery which forms after the force-fitting of the plate (107) around the rod (145), and **in that** the sleeve is, after fitting, positioned between the bulge (146) and the transmission element.

10. Rotor according to the preceding claim, **characterized in that** the plate (107) comes to bear against a bearing surface (150) made in the periphery of the said rod (145) perpendicular to the axis of the rod.

11. Rotor according to any one of the preceding claims, **characterized in that** the transmission element (39, 139) is made of a metallic material and the vanes carrier (37, 137) is made of plastic.

12. Rotor according to the preceding claim, **characterized in that** the transmission element is made of steel.

13. Rotor according to any one of the preceding claims, **characterized in that** the interposed element (1, 101) is made of a metallic material.

14. Rotor according to the preceding claim, **characterized in that** the interposed element is made of spring steel.

15. Rotor according to Claim 13 or 14, **characterized in that** the interposed element (1, 101) is produced by bending.

16. Rotor according to either one of Claims 9 and 10, **characterized in that** the fixing means (113a) carried by the plate of the interposed element (101) are produced by pressing.

17. Pump forming at least one vacuum source, **characterized in that** it comprises at least one rotor according to one of the preceding claims.

18. Pump according to Claim 17, **characterized in that** the transmission element (39, 139) is driven by a cam shaft.

19. Pump according to Claim 17, **characterized in that** the transmission element (39, 139) is driven by an electric motor.

20. Pump according to Claim 17, **characterized in that** the transmission element (39, 139) is driven by a belt-driven pulley.

## Patentansprüche

1. Rotor, der ein Übertragungselement (39; 139), einen Flügelträger (37; 137) und mindestens einen Flügel enthält, wobei das Übertragungselement (39; 139) ein Drehmoment an den Flügelträger (37; 137) überträgt, wobei der Flügelträger (37; 137) mindestens ein Zwischenfügungselement (1; 101) aufweist, das bezüglich des Flügelträgers (37; 137) radial unbeweglich und fest mit dem Flügelträger (37; 137) verbunden ist, wobei das mindestens eine Zwischenfügungselement zwischen den Auflageflächen zwischen dem Übertragungselement (39; 139) und dem Flügelträger (37; 137) angeordnet ist, um den Auflagedruck des Übertragungselements (39; 139) auf den Flügelträger (37; 137) zu übertragen, wobei das mindestens eine Zwischenfügungselement (1; 101) gegenüber dem Verschleiß durch Reibung durch das Übertragungselement (39; 139) bei der radialen Verschiebung des Übertragungselements (39; 139) bezüglich des Flügelträgers (37; 137) fest ist, **dadurch gekennzeichnet, dass** das Übertragungselement (39; 139) durch das mindestens eine Zwischenfügungselement fest mit dem Flügelträger (37; 137) verbunden ist.

2. Rotor nach Anspruch 1, **dadurch gekennzeichnet, dass** das mindestens eine Zwischenfügungselement (1, 101) zwei parallele Rippen (3, 5, 103, 105) aufweist.

3. Rotor nach Anspruch 2, **dadurch gekennzeichnet, dass** die zwei Rippen (3, 103, 5, 105) durch eine Platte (7, 107) verbunden sind.

4. Rotor nach Anspruch 3, **dadurch gekennzeichnet, dass** die Rippen (3, 103, 5, 105) sich lotrecht zur Platte (7, 107) und auf der gleichen Seite der Platte (7, 107) erstrecken.

5. Rotor nach Anspruch 3 oder 4, **dadurch gekennzeichnet, dass** die Rippen (3, 5, 103, 105) bezüglich einer Längsachse (XX') der Platte (7, 107) symmetrisch sind.

6. Rotor nach einem der Ansprüche 3 bis 5, **dadurch gekennzeichnet, dass** das mindestens eine Zwischenfügungselement fest mit einer zentralen Stange (45, 145) verbunden ist, die vom Flügelträger (27, 137) getragen wird.

7. Rotor nach dem vorhergehenden Anspruch, **dadurch gekennzeichnet, dass** die Platte (7) eine Öffnung (21) aufweist, in die mindestens zwei Zungen (15, 17) münden, die mit der vom Flügelträger (37) getragenen zentralen Stange (45) zusammenwirken.

8. Rotor nach Anspruch 6, **dadurch gekennzeichnet, dass** die Platte Befestigungseinrichtungen (113a) aufweist, die mit vom Flügelträger getragenen zweiten Befestigungseinrichtungen (113b) zusammenwirken.

9. Rotor nach Anspruch 8, **dadurch gekennzeichnet, dass** die von der Platte (107) getragenen Befestigungseinrichtungen (113a) eine Öffnung (121) mit kleinerem Durchmesser (d) aufweisen, die von einer Muffe (123) umrandet wird, und dass die Befestigungseinrichtungen (113b) eine Stange (145) mit größerem Durchmesser (D) aufweisen, die vom Flügelträger getragen wird, wobei die Stange mit einem Ringwulst (146) versehen ist, der auf dem Umfang vorsteht, der sich nach der Presseinpassung der Platte (107) um die Stange (145) bildet, und dass die Muffe nach dem Einbau zwischen dem Wulst (146) und dem Übertragungselement angeordnet ist.

10. Rotor nach dem vorhergehenden Anspruch, **dadurch gekennzeichnet, dass** die Platte (107) auf einer Auflagefläche (150) in Auflage kommt, die im Umfang der Stange (145) lotrecht zur Achse der Stange ausgebildet ist.

11. Rotor nach einem der vorhergehenden Ansprüche, **dadurch gekennzeichnet, dass** das Übertragungselement (39, 139) aus metallischem Material und der Flügelträger (37, 137) aus Kunststoff ist.

12. Rotor nach dem vorhergehenden Anspruch, **dadurch gekennzeichnet, dass** das Übertragungselement aus Stahl hergestellt wird.

13. Rotor nach einem der vorhergehenden Ansprüche, **dadurch gekennzeichnet, dass** das Zwischenfügungselement (1, 101) aus einem metallischen Material hergestellt wird.

14. Rotor nach dem vorhergehenden Anspruch, **dadurch gekennzeichnet, dass** das Zwischenfügungselement aus Federstahl hergestellt wird.

15. Rotor nach Anspruch 13 oder 14, **dadurch gekennzeichnet, dass** das Zwischenfügungselement (1, 101) durch Umbiegen hergestellt wird.

16. Rotor nach einem der Ansprüche 9 oder 10, **dadurch gekennzeichnet, dass** die von der Platte des Zwischenfügungselements (101) getragenen Befestigungseinrichtungen (113a) durch Tiefziehen hergestellt werden.

17. Pumpe, die mindestens eine Unterdruckquelle bildet, **dadurch gekennzeichnet, dass** sie mindestens einen Rotor nach einem der vorhergehenden Ansprüche aufweist.

18. Pumpe nach Anspruch 17, **dadurch gekennzeichnet, dass** das Übertragungselement (39, 139) von einer Nockenwelle angetrieben wird.

19. Pumpe nach Anspruch 17, **dadurch gekennzeichnet, dass** das Übertragungselement (39, 139) von einem Elektromotor angetrieben wird.

20. Pumpe nach Anspruch 17, **dadurch gekennzeichnet, dass** das Übertragungselement (39, 139) von einer von einem Riemen angetriebenen Riemenscheibe angetrieben wird.
